# EUROPEAN PATENT APPLICATION

(11) **EP 1 873 026 A2**
(43) Date of publication of application: **02.01.2008**
(21) Application number: 07075494.0
(22) Date of filing: 21.06.2007
(51) Int. Cl.: B60T 7/04, B60T 8/40

(54) **Piezoelectric composite brake pedal feel emulating system**

(30) Priority: 27.06.2006 US 475526
(71) Applicant: Delphi Technologies, Inc., Troy, Michigan 48007 (US)
(72) Inventor: Shaw, Schuyler Scott, Tipp City, OH 45371 (US); Flanagan, Paul F., Dayton, OH 45424 (US)
(74) Representative: Denton, Michael John

(57) **Abstract**

A pedal feel emulating system including a brake pedal fixedly mounted to a surface, the brake pedal including at least one piezoelectric material, and an electrical power source connected to the brake pedal to supply electrical energy to the piezoelectric material.

## Description

### TECHNICAL FIELD

The present application relates to brake-by-wire brake systems and, more particularly, to pedal feel emulators for brake-by-wire brake systems.

### BACKGROUND OF THE INVENTION

Brake-by-wire brake systems have been developed to replace traditional hydraulic brake systems, which typically employ a hydraulic connection between a user's brake input (e.g., a brake pedal) and the brake unit (e.g., a brake caliper), with an electrical connection between the user's brake input and the brake unit. Therefore, in a typical brake-by-wire brake system, there may no longer be a need for a brake pedal adapted to pressurize hydraulic fluid in a master fluid cylinder. However, brake-by-wire brake systems typically require a user input device for communicating a user's braking commands to an electronic control unit.

For convenience and simplicity, brake-by-wire brake systems typically employ a user input device that resembles a brake pedal similar to a brake pedal used on a conventional hydraulic brake-based vehicle. Furthermore, due to the prevalence of hydraulic brake-based vehicles, users often are more familiar with, and have grown accustomed to, the feel of a brake pedal having a non-linear pedal travel versus pedal force.

Attempts have been made to replicate the non-linear pedal travel versus pedal force using, for example, mechanical springs, pistons and various linkages. However, such systems are often tedious and difficult to assemble.

Accordingly, there is a need for an improved pedal feel emulating system for brake-by-wire brake systems capable of providing a non-linear pedal travel versus pedal force.

### SUMMARY OF THE INVENTION

In one aspect, the disclosed pedal feel emulating system includes a brake pedal fixedly mounted to a surface, the brake pedal including at least one piezoelectric material, and an electrical power source connected to the brake pedal to supply electrical energy to the piezoelectric material.

In another aspect, the disclosed pedal feel emulating system includes a brake pedal fixedly mounted to a surface, the brake pedal including at least one piezoelectric material, a force sensor connected to the brake pedal, the force sensor being adapted to generate a force signal indicative of a force applied to the brake pedal, a controllable electrical power source connected to the brake pedal, the controllable electrical power source being adapted to supply a variable electrical energy to the piezoelectric material, and an electronic control unit in communication with the force sensor and the controllable electrical power source, wherein the electronic control unit is adapted to control the variable electrical energy based upon the force signal.

In another aspect, a method for obtaining a non-linear pedal travel versus pedal force of a brake pedal is provided and includes the steps of providing the brake pedal with at least one piezoelectric material, applying a force to the brake pedal, monitoring the force applied to the brake pedal and, based upon the monitored force, supplying a predetermined amount of electrical energy to the piezoelectric material.

Other aspects of the disclosed pedal feel emulating system and associated method for obtaining a non-linear pedal travel versus pedal force will become apparent from the following description, the accompanying drawings and the appended claims.

### BRIEF DESCRIPTION OF THE DRAWINGS

Fig. 1 is a front elevational view of one aspect of the disclosed pedal feel emulating system;

Fig. 2 is a front elevational view of a second aspect of the disclosed pedal feel emulating system;

Fig. 3 is a sectional view, taken at line A-A of a pedal of the pedal feel emulating system of Fig. 1;

Fig. 4 is a top plan view of the section shown in Fig. 3; and

Fig. 5 is a graphical illustration of pedal travel versus pedal force of the pedal feel emulating system of Fig. 1.

### DESCRIPTION OF THE PREFERRED EMBODIMENTS

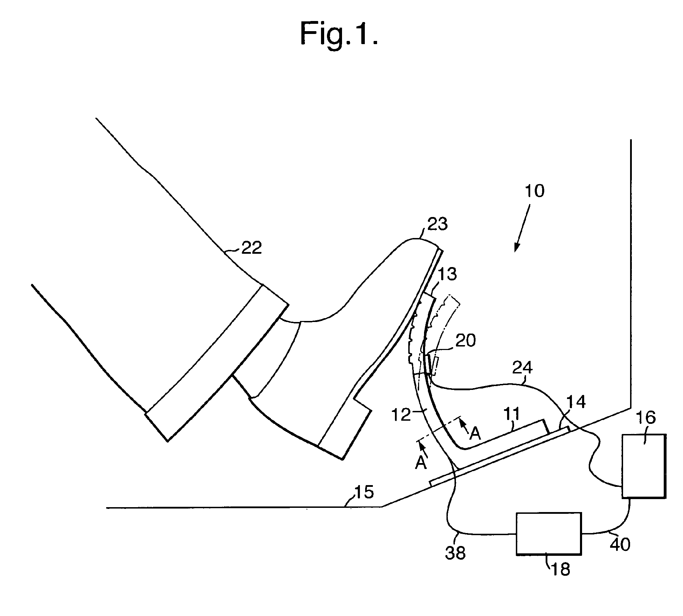

As shown in Fig. 1, one aspect of the disclosed pedal feel emulating system, generally designated 10, may include a brake pedal 12, a mounting surface 14, an electronic control unit 16, a controllable electrical power source 18 and a force sensor 20. The mounting surface 14 may be positioned on the floor 15 of a vehicle (not shown) such that the pedal 12 extends upwardly from the floor 15. The brake pedal 12 may be a cantilevered brake pedal and may include a mounting portion 11 and an engaging portion 13. The mounting portion 11 of the pedal 12 may be securely connected to the mounting surface 14 by, for example, brackets, bolts, screws, adhesives, welding, rivets or any other available means. The engaging portion 13 of the pedal 12 may be adapted to be depressed by the foot 23 of a user 22.

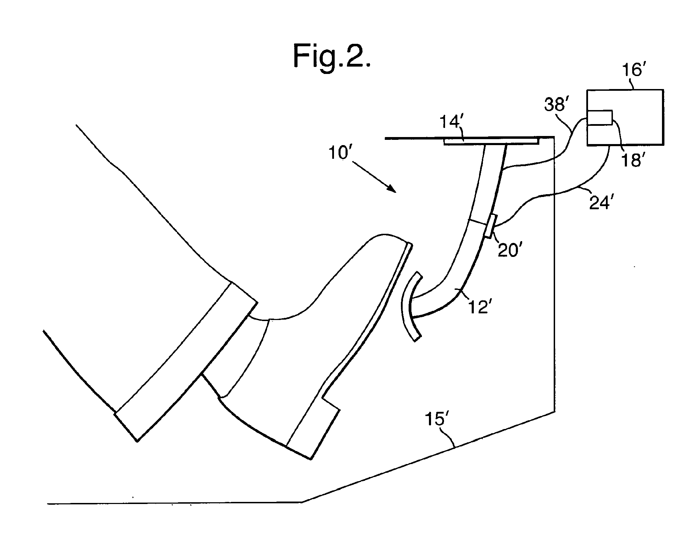

Alternatively, in the system 10' shown in Fig. 2, the mounting surface 14' may be positioned above the floor 15' of the vehicle such that the pedal 12' is suspended from the mounting surface 14' above the floor 15'.

Referring again to Fig. 1, the force sensor 20, which may be a strain gauge-type sensor, a piezoelectric-type sensor or the like, may be connected to the pedal 12 to sense a force supplied to the pedal 12 by the user 22. In one aspect, the force sensor 20 may be adapted to communicate a sensed force to the electronic control unit 16 by, for example, a communication line 24. Those skilled in the art will appreciate that communication line 24 may be a hard wired communication line or a wireless communication line.

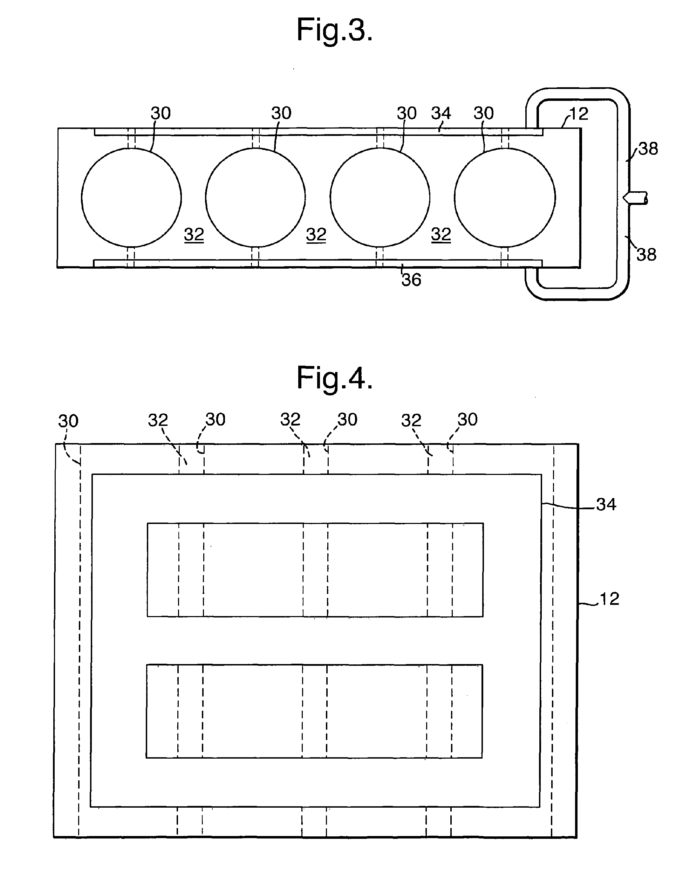

Referring to Figs. 3 and 4, the pedal 12 may be formed from, may include or may be a composite of piezoelectric material. As used herein piezoelectric material is intended to include any material capable of applying a force to a member when electrical power is supplied thereto. In one aspect, the pedal 12 may be formed from a plurality of piezoelectric fibers 30 suspended or dispersed in a carrier 32, such as a polymer matrix, wherein the piezoelectric fibers 30 are disposed between or connected to the two electrodes 34, 36.

Referring to Figs. 1 and 3, the electrodes 34, 36 may be connected to the controllable electrical power source 18 by a supply line 38 and the controllable electrical power source 18 may in turn be connected to the electronic control unit 16 by a communication line 40 (Fig. 1). Alternatively, referring to Fig. 2, the electronic control unit 16' may include an integral controllable electrical power source 18' and the electrodes 34, 36 may be directly connected to the electronic control unit 16' by a supply line 38'.

The piezoelectric fibers 30 may be woven or non-woven. In one aspect, the pedal 12 may be formed from a mesh of piezoelectric fibers 30 in a polymer matrix 32, wherein the mesh of piezoelectric fibers 30 is positioned between or connected to the electrodes 34, 36. Furthermore, the pedal 12 may include various reinforcing materials in or about the polymer matrix 32 to provide physical reinforcement to the pedal 12. For example, in addition to piezoelectric fibers 30, the pedal 12 may include fiberglass fibers, glass fibers, metal fibers and the like suspended in the polymer matrix 32.

Accordingly, when electrical power (e.g., a voltage) is supplied to the electrodes 34, 36, the piezoelectric fibers 30 positioned therebetween may be activated according to the well-known piezoelectric effect, thereby supplying a force to the polymer matrix surrounding the fibers 30 and effectively increasing the rigidity or stiffness of the pedal 12 (i.e., the willingness of the pedal 12 to flex when depressed). Therefore, the rigidity/stiffness of the pedal 12 may be controlled by controlling the amount of power supplied to the electrodes 34, 36 by the controllable electrical power source 18.

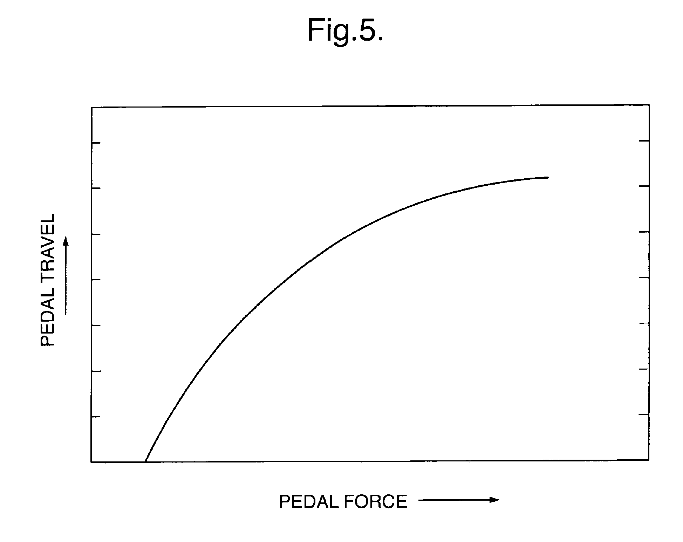

Thus, by controlling the rigidity/stiffness of the pedal 12 based upon signals received from the force sensor 20, the electronic control unit 16 may achieve a non-linear pedal travel versus pedal force, as shown in Fig. 5. For example, when the force sensor 20 detects a high force in the pedal 12, the electronic control unit 16 may direct the controllable electrical power source 18 to apply a higher voltage to the piezoelectric materials in the pedal, thereby increasing the rigidity/stiffness of the pedal 12 such that the user 22 experiences a greater resistance when depressing the pedal 12.

Although various aspects of the disclosed pedal feel emulator have been shown and described, modifications may occur to those skilled in the art upon reading the specification. The present application includes such modifications and is limited only by the scope of the claims.

## Claims

1. A pedal feel emulating system comprising:
a brake pedal fixedly mounted to a surface, said brake pedal including at least one piezoelectric material; and
an electrical power source connected to said brake pedal to supply electrical energy to said piezoelectric material.

2. The system of claim 1 wherein said piezoelectric material includes piezoelectric fibers.

3. The system of claim 2 wherein said piezoelectric fibers are suspended in a carrier.

4. The system of claim 3 wherein said carrier is a polymer matrix.

5. The system of claim 1 wherein said brake pedal includes at least one reinforcing material.

6. The system of claim 1 wherein said brake pedal is fixedly mounted to a floor of a vehicle.

7. The system of claim 1 wherein said electrical power source is a controllable electrical power source.

8. The system of claim 1 wherein said electrical power source is adapted to apply a voltage across said piezoelectric material.

9. The system of claim 1 further comprising a force sensor connected to said brake pedal.

10. The system of claim 9 further comprising an electronic control unit in communication with said force sensor and said electrical power source.

11. The system of claim 10 wherein said electronic control unit and said electrical power source are one and the same.

12. A pedal feel emulating system comprising:
a brake pedal fixedly mounted to a surface, said brake pedal including at least one piezoelectric material;
a force sensor connected to said brake pedal, said force sensor being adapted to generate a force signal indicative of a force applied to said brake pedal;
a controllable electrical power source connected to said brake pedal, said controllable electrical power source being adapted to supply a variable electrical energy to said piezoelectric material; and
an electronic control unit in communication with said force sensor and said controllable electrical power source, wherein said electronic control unit is adapted to control said variable electrical energy based upon said force signal.

13. The system of claim 12 wherein said piezoelectric material includes piezoelectric fibers.

14. The system of claim 13 wherein said piezoelectric fibers are suspended in a carrier.

15. The system of claim 14 wherein said carrier is a polymer matrix.

16. The system of claim 12 wherein said brake pedal includes at least one reinforcing material.

17. The system of claim 12 wherein said brake pedal is fixedly mounted to a floor of a vehicle.

18. The system of claim 12 wherein said controllable electrical power source is adapted to apply a voltage across said piezoelectric material.

19. The system of claim 12 wherein said electronic control unit and said controllable electrical power source are one and the same.

20. A method for obtaining a non-linear pedal travel versus pedal force of a brake pedal comprising the steps of:
providing said brake pedal with at least one piezoelectric material;
applying a force to said brake pedal;
monitoring said force applied to said brake pedal; and
based upon said monitored force, supplying a predetermined amount of electrical energy to said piezoelectric material.
